# EUROPÄISCHE PATENTSCHRIFT

(11) **EP 4 002 217 B1**
(45) Veröffentlichungstag und Bekanntmachung des Hinweises auf die Patenterteilung: **25.02.2026**
(21) Anmeldenummer: 21202565.4
(22) Anmeldetag: 14.10.2021
(51) Int. Cl.: G06N 3/08, G06N 3/045, G06N 3/0455, G06N 3/0464, G06N 3/0495, G06N 3/0895

(54) **VERFAHREN ZUR REDUKTION VON TRAININGSDATEN**
METHOD FOR REDUCING TRAINING DATA
PROCÉDÉ DE RÉDUCTION DES DONNÉES D'APPRENTISSAGE

(30) Priorität: 11.11.2020 DE 102020129675
(43) Veröffentlichungstag der Anmeldung: 25.05.2022
(73) Patentinhaber: dSPACE GmbH, 33102 Paderborn (DE)
(72) Erfinder: Hasenklever, Daniel, 33102 Paderborn (DE); Burdorf, Sven, 33102 Paderborn (DE); Nolde, Christian, 33102 Paderborn (DE)

(56) Entgegenhaltungen:
- EP-A1- 3 651 082
- WANG TIANYANG ET AL: "Data Dropout: Optimizing Training Data for Convolutional Neural Networks", 2018 IEEE 30TH INTERNATIONAL CONFERENCE ON TOOLS WITH ARTIFICIAL INTELLIGENCE (ICTAI), IEEE, 5 November 2018 (2018-11-05), pages 39 - 46, XP033475810, DOI: 10.1109/ICTAI.2018.00017
- AMINI ALEXANDER ET AL: "Variational Autoencoder for End-to-End Control of Autonomous Driving with Novelty Detection and Training De-biasing", 2018 IEEE/RSJ INTERNATIONAL CONFERENCE ON INTELLIGENT ROBOTS AND SYSTEMS (IROS), IEEE, 1 October 2018 (2018-10-01), pages 568 - 575, XP033491655, DOI: 10.1109/IROS.2018.8594386

## Beschreibung

Die Erfindung betrifft ein Verfahren zur Reduktion von Trainingsdaten gemäß dem Oberbegriff des Patentanspruchs 1.

Aus Tianyang Wang, Jun Huan, Bo Li; "Data Dropout: Optimizing Training Data for Convolutional Neural Networks"; 2018 in IEEE 30th International Conference on Tools with Artificial Intelligence (ICTAI), ist bekannt, dass das Training künstlicher neuronaler Netzwerke (KNN) durch gezielte Reduktion der Trainingsdaten verbessert werden kann. Hier wird das Training in zwei Schritten durchgeführt, wobei der erste Teil des Trainings mit dem vollständigen Trainingsdatensatz und der zweite Teil des Trainings mit einem reduzierten Datensatz erfolgt.

Vor diesem Hintergrund besteht die Aufgabe der Erfindung darin den Stand der Technik weiterzubilden und insbesondere ein effizienteres Verfahren zur Reduktion der Trainingsdaten anzugeben, welches bevorzugt das Training mit dem vollständigen, nicht-reduzierten Trainingsdatensatz vermeidet.

Die Aufgabe wird durch ein Verfahren zur Reduktion von Trainingsdaten mit den Merkmalen des Patentanspruchs 1 gelöst. Ebenfalls gelöst wird die Aufgabe durch ein Computerprogramm-Produkt mit den Merkmalen des Patentanspruchs 11 und ein Computersystem mit den Merkmalen des Patentanspruchs 12. Vorteilhafte Ausgestaltungen der Erfindung sind Gegenstand von abhängigen Unteransprüchen.

Gemäß des Verfahrens zur Reduktion von Trainingsdaten mittels eines Systems umfassend einen Encoder, wobei zumindest ein Teil der Trainingsdaten eine zeitliche Sequenz bilden und in einem ersten Satz von Trainingsdaten zusammengefasst sind, und der Encoder Eingangsdaten auf Protypen-Merkmals-Vektoren eines Satzes von Prototypen-Merkmals-Vektoren abbildet, wird a) eines ersten Eingangsdatums aus dem ersten Satz von Trainingsdaten empfangen, b) das ersten Eingangsdatums durch den Encoder propagiert, wobei dem Eingangsdatum von dem Encoder ein oder mehr Merkmals-Vektoren zugewiesen werden, und in Abhängigkeit der zugewiesenen Merkmals-Vektoren eine bestimmte Menge von Prototypen-Merkmals-Vektoren ermittelt und dem ersten Eingangsdatum zugewiesen werden, c) eine aggregierter Vektor für das erste Eingangsdatum erstellt wird, d) die Schritte a) bis c) mit einem zweiten Eingangsdatum aus dem ersten Satz von Trainingsdaten durchgeführt werden und eine zweiter aggregierter Vektors für das zweite Eingangsdatum erstellt wird, e) zumindest der erste und der zweiter aggregierte Vektor verglichen werden und eine Ähnlichkeitsmaß der aggregierten Vektoren bestimmt wird und f) das erste Eingangsdatums aus dem ersten Satz von Trainingsdaten entfernt wird, wenn das bestimmte Ähnlichkeitsmaß einen Schwellwert überschreitet, wobei das Markieren oder Entfernen, zur Folge hat, dass das erste Eingangsdatum aus dem ersten Trainingsdatensatz nicht zu einem ersten Training verwendet wird.

Ein Vorteil des erfindungsgemäßen Verfahrens ist es, dass Trainingsdaten schnell und effizient vom Training ausgeschlossen werden können und somit der Trainingserfolg verbessert wird. Weiter verbessert das Verfahren auch die Möglichkeit Vorverarbeitungs-Schritte (engl. "preprocessing") effizient durchzuführen. Zu diesen zählen zum Beispiel die Anreicherung der einzelnen Trainingsdaten mit zusätzlichen Informationen über deren Inhalte (engl. "labeling"). Da, nach Durchführung des Verfahrens, weniger Daten gelabelt werden müssen, ist auch das Preprocessing effektiver. Ebenfalls von Vorteil ist es, dass der erfindungsgemäß verwendete Encoder mit nicht-vorbereiteten Daten, insbesondere nicht-gelabelten Daten, trainiert werden kann. Dies geschieht z.B. bei Training eines Autoencoders, der den Encoder umfasst. Diese des unüberwachten maschinellen Lernens ist erheblich weniger aufwändig, da auf den sehr zeitintensiven Schritt des Labelns oder Annotierens der Trainingsdaten verzichtet werden kann.

Erfindungsgemäß umfassen der erste Satz von Trainingsdaten Video-, Radar- und/oder Lidar-Frames.

Erfindungsgemäße Art der Trainingsdaten sind Sensordaten und hier speziell bildgebender oder Umfeld erfassender Sensoren, wie z.B. Kameras, Radar- oder Lidar-Sensoren. Damit sind typische Trainingsdaten Video-, Radar- oder Lidar-Frames.

Erfindungsgemäß sind die Video-, Radar- und/oder Lidar-Frames des ersten Satzes von Trainingsdaten zeitliche Sequenzen von Sensordaten, insbesondere von Sensordaten, welche bei einer Fahrt eines Fahrzeuges aufgezeichnet wurden oder Sensordaten welche künstlich erzeugt wurden, so dass sie Sensordaten einer Fahr eines Fahrzeuges nachbilden, sind.

Ein Frame stellt eine Momentaufnahme bezogen auf einen vom Sensor erfassten Bildausschnitt dar. Diese einzelnen Frames bilden meist Sequenzen aus zeitlich nacheinander liegenden Einzelframes. Dieser Art Trainingsdaten als zeitliche Sequenzen von Sensordaten werden häufig von Fahrzeugen aufgezeichnet. Hier bewegen sich diese Fahrzeuge durch den üblichen Straßenverkehr, um für diese Situation typische Sensordaten aufzunehmen. Alternativ können Sensordaten auch künstlich erzeugt werden. Dazu kann in einer Simulation eine fiktive Szene, z.B. des Straßenverkehrs, erzeugt und daraus Sensordaten für eine simuliertes Fahrzeug berechnet werden. Dies kann aus Zeitgründen geschehen, da Simulationen sehr viele schneller ablaufen können als reale Fahrten. Ebenso können aber auch in der Realität nicht gut nachstellbare Situationen, z.B. Notbremsungen oder sogar Unfälle, in der Simulation einfach nachgestellt werden. In dieser Art von sequenziellen Trainingsdaten ist es sehr häufig so, dass nicht alle Frames für das Training wichtige Informationen beinhalten oder zwei Frames praktische nur redundante Informationen. Beispielhaft sei hier das warten an einer roten Ampel im Straßenverkehr genannt. In der Wartezeit werden eine Vielzahl von Sensordaten aufgenommen, welche sich aber in den für das Training relevanten Aspekten nicht oder nur unwesentlich unterscheiden.

In einer anderen Ausführungsform des Verfahrens sind das ersten und das zweite Eingangsdatum des ersten Satzes von Trainingsdaten zeitlich aufeinander folgende Daten in der zeitlichen Sequenz der Trainingsdaten.

In einer weiteren Ausführungsform des Verfahrens werden die Trainingsdaten des ersten Satzes von Trainingsdaten zum Trainieren eines Algorithmus für das hochautomatisierte oder autonome Steuern von Fahrzeugen verwendet.

Im Rahmen der Entwicklung von Algorithmen zur Steuerung hochautomatisierte oder autonome Fahrzeuge werden eine Vielzahl von Trainingsdaten benötigt. Da ein großer Teil der Algorithmen auf künstlicher Intelligenz und insbesondere tiefen neuronalen Netzen basiert, müssen diese mit entsprechenden Trainingsdaten trainiert werden. Weitere Trainingsdaten werden zum Test bzw. zur Absicherung der Entwickelten Algorithmen benötigt. Das erfindungsgemäße Verfahren kann als insbesondere für die Auswahl relevanter Trainingsdaten aus einem großen Satz von Trainingsdaten verwendet werden, mit welchen dann Algorithmen für hochautomatisierte oder autonome Fahrzeuge trainiert oder getestet werden.

In einer Ausführungsform des Verfahrens werden die Schritte a) bis f) direkt bei der Aufzeichnung oder Erzeugung der Trainingsdaten durchgeführt und wird in Schritt f) das erste Trainingsdatum entfernt, wenn der Schwellwert des Ähnlichkeitsmaßes überschritten wird.

Die gemessenen oder erzeugten Trainingsdaten, insbesondere Sensordaten, benötigen in alle Regel sehr viel Speicherplatz und können bei Fahrten im Straßenverkehr nur im Fahrzeug und damit nur auf begrenztem Raum gespeichert werden. Eine drahtlose Übertragung der Sensordaten ist aufgrund ihrer Größe in den meisten Fällen nicht möglich. Um nun Speicherplatz einzusparen, ist das erfindungsgemäße Verfahren geeignet zeitlich direkt nach der Erfassung der Daten durchgeführt zu werden und als redundant identifizierte Daten direkt wieder zu löschen und Speicherplatz einzusparen.

In einer anderen Ausführungsform des Verfahrens werden die Schritte a) bis f) vor dem Training oder einem Preprocessing mit den Trainingsdaten des ersten Satzes von Trainingsdaten durchgeführt.

Ebenfalls kann das erfindungsgemäße Verfahren auch zu einem späteren Zeitpunkt verwendet werden, um vor dem Training oder vor einem Preprocessing redundante Trainingsdaten aus dem zu verwendenden Datensatz zu entfernen. Dies spart insbesondere Zeit und Rechenressourcen bei der Vorbereitung der Trainingsdaten und liefert bessere Ergebnisse beim Training. Das Preprocessing umfasst insbesondere das Labeln oder Annotieren der für das Training zu verwendenden Trainingsdaten.

Erfindungsgemäß ist der aggregierte Vektor ein Histogramm-Vektor, welcher jedem Prototypen-Merkmals-Vektoren eine ganze Zahl zuordnet, welche die jeweils zugewiesene Anzahl des jeweiligen Prototypen-Merkmals-Vektors repräsentiert.

In einer anderen Weiterbildung des Verfahrens wird das Ähnlichkeitsmaß in Schritt e) mittels einer Kosinus-Ähnlichkeit bestimmt.

In einer weiteren Ausführungsform des Verfahrens umfasst das Ähnlichkeitsmaß in Schritt e) den Vergleich des ersten, des zweiten und eines dritten aggregierten Vektors, wobei der dritte aggregierte Vektor mittels der Schritte a) bis c) mit einem dritten Eingangsdatum aus dem ersten Satz von Trainingsdaten erzeugt wurde.

In einer Ausführungsform des Verfahrens ist der Encoder als Teil eines Autoencoders trainiert worden.

In einer Weiterbildung des Verfahrens umfasst der Encoder einen ersten Satz von Prototypen-Merkmals-Vektoren, welche beim Trainieren des Autoencoders gelernt wurden.

In einer anderen Weiterbildung des Verfahrens wird der Encoder und/oder der Autoencoder mittels eines neuronalen Netzes, insbesondere eines Faltungsnetzwerks umgesetzt.

Das erfindungsgemäße Verfahren kann auch als Computerprogramm-Produkt umfassend Programmcode vorliegen, der bei Ausführung durch einen Computer diesen veranlässt, eines der Verfahren nach den Ansprüchen 1 bis 10 auszuführen.

Alternativ kann das erfindungsgemäße Verfahren auch in einem Computersystem, eingerichtet zur Ausführung eines der Verfahren nach den Ansprüchen 1 bis 10, vorliegen.

Die Erfindung wird nachfolgend unter Bezugnahme auf die Zeichnungen näher erläutert. Hierbei werden gleichartige Teile mit identischen Bezeichnungen beschriftet. Darin zeigt:
- Figur 1: einen schematischen Ablauf des Verfahrens zur Reduktion von Trainingsdaten,
- Figur 2: einen schematischen Aufbau eines Autoencoders gemäß einer erfindungsgemäßen Ausführungsform,
- Figur 3: einen schematischen Aufbau zum Ablauf des Verfahrens zur Bestimmung aggregierter Informationen zu Trainingsdaten,
- Figur 4: einen schematischen Ablauf des Verfahrens zur Reduktion von Trainingsdaten mit Darstellung der sequenziellen Trainingsdaten und eines Vergleichs.

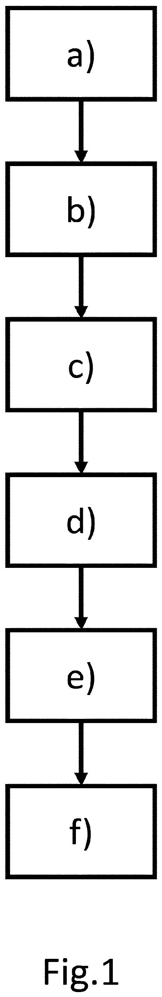

Die Abbildung der Figur 1 zeigt den Ablauf der Schritte des erfindungsgemäßen Verfahrens. In Schritt a) wird ein erstes Eingangsdatum aus dem ersten Satz von Trainingsdaten empfangen. Die Trainingsdaten können insbesondere Bilder (engl. "frames") einer Sequenz von Daten sein. Ein typisches Beispiel ist hier eine Videosequenz, welche aus einer Abfolge von Bildern bzw. Frames in bestimmter Reihenfolge besteht. Das empfangene Eingangsdatum wird in Schritt b) durch den Encoder (12) des Systems propagiert, wobei dabei dem Eingangsdatum Merkmalsvektoren zugewiesen werden. Bei diesem Vorgang wird in der Regel die Dimensionalität des Eingangsdatums reduziert, so dass Aspekte des Eingangsdatums gewissermaßen zusammengefasst werden. Diese Zusammengefassten Informationen über das Eingangsdatum werden als Merkmalsvektoren bezeichnet. Wie diese Abbildung auf Merkmalsvektoren erfolgt, ist abhängig von der Parametrierung des Encoders (12), welche zuvor mittels Trainings gelernt wurde. Dieses Training findet im Vorfeld des Verfahrens zur Reduktion von Trainingsdaten statt und wird mit möglichst ähnlichen Daten wie den später zu analysierenden und zu reduzierenden Daten durchgeführt. Wobei Ähnlichkeit hier aus Sicht der Gesamtheit der Datensätze, welche sich statistisch ähneln sollen, zu verstehen ist und nicht auf der Ähnlichkeit einzelnen Daten bzw. Frames zu bewerten ist. Im Rahmen des Trainings des Encoders (12) wurden auch Prototypen-Merkmals-Vektoren identifiziert und festgelegt. Diese entsprechen einem festen Satz von Merkmals-Vektoren, die typisch bzw. charakteristisch für die im Training des Encoders verwendeten Daten sind. Dieser feste Satz an Prototypen-Merkmals-Vektoren wird engl. auch als "Code-Book" bezeichnet. Die Merkmalsvektoren werden auf die Prototypen-Merkmals-Vektoren des Code-Books abgebildet. Dieser Prozess wird auch als Quantisierung bezeichnet. Die so gefundenen Prototypen-Merkmals-Vektoren werden dem jeweils durch den Encoder (12) propagierten Eingangsdatum zugeordnet. In Schritt c) wird aus den jeweils zugeordneten Prototypen-Merkmals-Vektoren ein aggregierter Vektor (30) gebildet, der die in den zugeordneten Prototypen-Merkmals-Vektoren enthaltenen Informationen zusammenfasst. Dies erfolgt in Form eines Histogramms. Im folgenden Schritt d) werden die Schritte a) bis c) für eine weiteres zweites Eingangsdatum analog zur zuvor beschriebenen Vorgehensweise durchgeführt, was zu einem weiteren zweiten aggregierten Vektor (30) zum zweiten Eingangsdatum führt. Um nun entscheiden zu können ob das erste Eingangsdatum dem zweiten so ähnlich ist, dass nicht beide beim Training verwendet werden sollen, werden in Schritt e) die aggregierten Vektoren (30) der beiden Eingangsdaten verglichen. Eine Möglichkeit des Vergleichs ist z.B. über eine Kosinus-Ähnlichkeit. Überschreitet das Ergebnis des Vergleichs einen festgelegten Schwellwert, so ist eine hohe Ähnlichkeit der beiden Eingangsdaten erkannt und das erste Eingangsdatum wir in Schritt f) aus dem ersten Trainingsdatensatz entfernt. In beiden Fällen wird das erste Eingangsdatum nicht zu einem nachfolgenden Training verwendet.

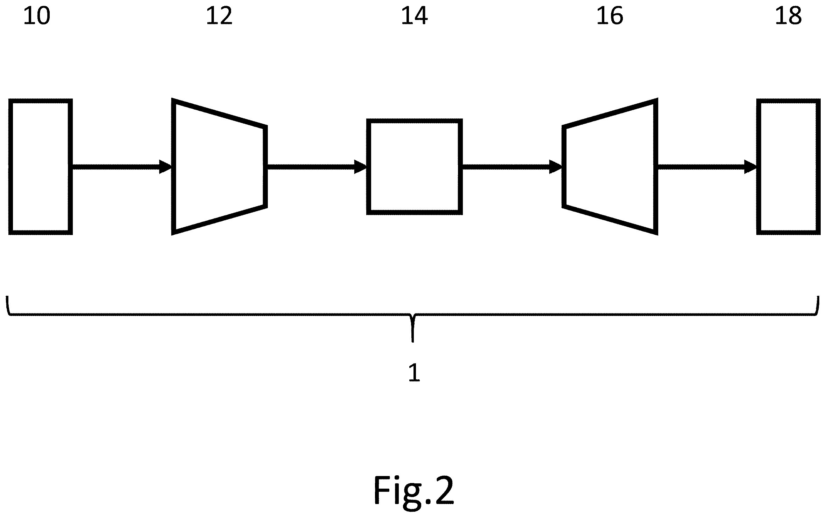

Figur 2 zeigt schematisch den Aufbau eines Autoencoders (1), wie er anteilig für das erfindungsgemäße Verfahren verwendet werden kann. Mittels der Eingangsschicht (10) werden dem Encoder (12) Daten zugeführt. In der Vektor-Quantisierungs-Einheit (14) werden die Merkmals-Vektoren, welche der Encoder (12) als Ergebnis der ihm zugeführten Daten ausgibt, auf einen festen Satz von Prototypen-Merkmals-Vektoren des sog. Code-Book abgebildet. Dieser Prozess entspricht einer Quantisierung, da auf eine feste Anzahl diskreter Zustände bzw. Vektoren abgebildet wird. Ein Autoencoder (1) umfasst weiter einen Decoder (16), welcher aus einer Zusammenstellung ihm zugeführter Prototypen-Merkmals-Vektoren als Umkehrung des Encoders (12) Daten für eine Ausgangsschicht (18) rekonstruiert. Die rekonstruierten Daten sollen dabei möglichst den Daten der Eingangsschicht (10) entsprechen. Wird ein Autoencoder (1) trainiert, werden die in Encoder (12) und Decoder (14) vorliegenden Parameter und die Prototypen-Merkmals-Vektoren des Code-Book so angepasst, dass eine möglich genaue Rekonstruktion der Eingangsdaten (10) in der Ausgangsdatenschicht (18) erfolgt.

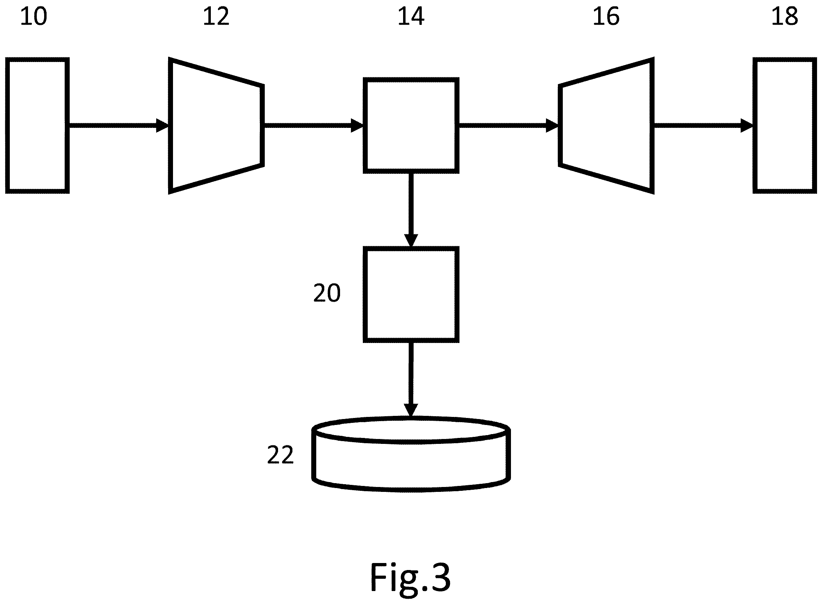

In Figur 3 ist der Aufbau zum Ermitteln aggregierter Informationen oder aggregierter Vektoren (30) des erfindungsgemäßen Verfahrens schematisch gezeigt. Die Eingangsschicht (10), sowie der Encoder (12) und die Vektor-Quantisierungs-Einheit (14) sind wie schon in Figur 2 gezeigt und beschrieben dargestellt. Weiter gezeigt ist eine Aggregation-Einheit (20), welche die zu einem Eingangsdatum ermittelten Prototypen-Merkmals-Vektoren zugeführt bekommt. Diese Erzeugt einen aggregierten Vektor (30) welche Informationen aus allen, einem Eingangsdatum zugehörigen, Prototypen-Merkmals-Vektoren zusammenfasst. Z.B. kann dies in Form eines Histogramm-Vektors erfolgen. Hierbei wird ein Vektor der Länge N gebildet, wobei N die Anzahl der Prototypen-Merkmals-Vektoren im Code-Book ist, und zu jedem Prototypen-Merkmals-Vektoren in der jeweiligen Zeile des Histogramm-Vektors abgelegt, wie häufig der entsprechende Prototypen-Merkmals-Vektoren dem jeweiligen Eingangsdatum zugeordnet wurde. Auch andere Formen der Informationsaggregation, wie einen Mittelwertbildung oder ähnliches sind jedoch**,** wenn auch nicht beansprucht.

Diese Information in Form der aggregierten Vektoren (30) werden dann in einem Datenspeicher (22), z.B. eine Datenbank, mit ihrer Zuordnung zu dem entsprechenden Eingangsdatum aus dem Satz von Trainingsdaten abgespeichert. Sie können dann entweder sofort oder zu einem späteren Zeitpunkt im Rahmen des erfindungsgemäßen Verfahrens weiterverwendet werden, um die Ähnlichkeit zweier Eingangsdaten zu bestimmen und zu entscheiden, ob eines der Eingangsdaten nicht für eine Training verwendet werden soll.

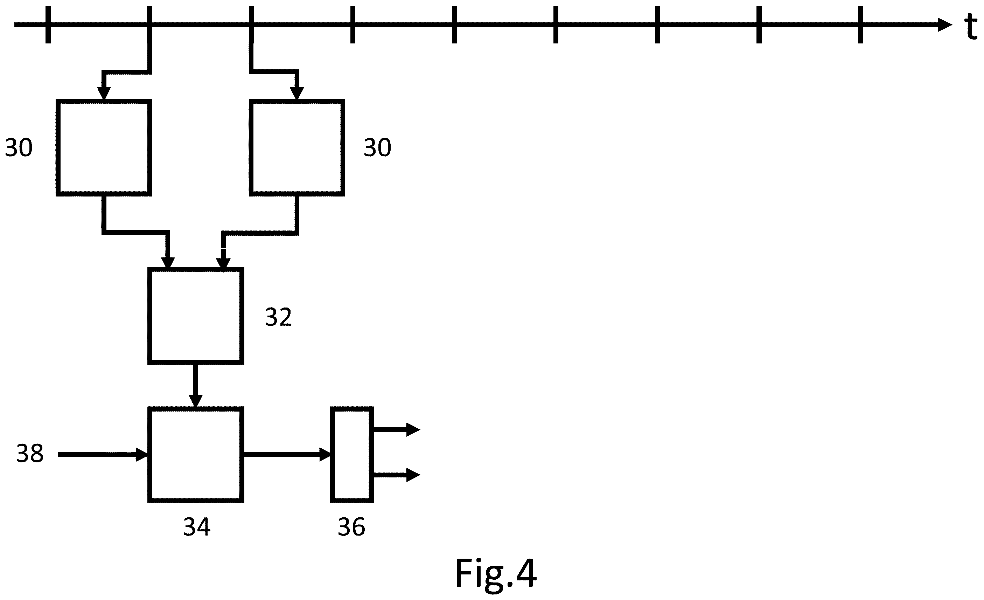

Figur 4 zeigt eine Darstellung der sequenziellen Trainingsdaten und den Ablauf eines Vergleichs zweier dieser Trainingsdaten. Auf der mit t bezeichneten Achse ist schematisch die sequenzielle Abfolge der Eingangsdaten dargestellt. Zu jedem Eingangsdatum wurde nach den Schritte a) bis c) ein zugehöriger aggregierter Vektor erzeugt und wie in Figur 3 dargestellt abgespeichert. Die aggregierten Vektoren (30) zweier zeitlich benachbarter Eingangsdaten werden nun in einer Vergleichseinheit (32) verglichen und ihre Ähnlichkeit in Form einer Kennzahl bestimmt. Hierbei kann z.B. eine Kosinus-Ähnlichkeit verwendet werden. In einer Schwellwert-Einheit (34), welche einen Schwellwert (38) bezüglich der der Kennzahl der Ähnlichkeit erhält, wird festgestellt, ob die Ähnlichkeit der beiden aggregierten Vektoren (30) über dem Schwellwert (38) liegt oder nicht. Basierend auf dieser Feststellung wird in einer Entscheidungs-Einheit (36) festgelegt, ob beide Eingangsdaten für das Training verwendet werden oder ob das erste Eingangsdatum für das Training verworfen wird. Dies kann durch eine spezielle Markierung oder das Löschen des Eingangsdatums erfolgen. Es ist vorteilhaft immer das zeitlich zuerst liegende Eingangsdatum zu verwerfen, da so sichergestellt ist, dass das zeitlich dem zweiten Eingangsdatum folgende Eingangsdatum wieder mit seinem direkten zeitlichen Vorgänger verglichen werden kann, wenn das erfindungsgemäße Verfahren auf weitere oder sogar alle Eingangsdaten des Trainingsdatensatzes angewendet werden soll.

## Patentansprüche

1. Computer-implementiertes Verfahren zur Reduktion von Trainingsdaten, mittels eines Systems umfassend einen Encoder, wobei zumindest ein Teil der Trainingsdaten eine zeitliche Sequenz bilden und in einem ersten Satz von Trainingsdaten zusammengefasst sind, wobei der erste Satz von Trainingsdaten Video-, Radar- und/oder Lidar-Frames umfasst und die Video-, Radar- und/oder Lidar-Frames des ersten Satzes von Trainingsdaten zeitliche Sequenzen von Sensordaten, welche bei einer Fahrt eines Fahrzeuges aufgezeichnet wurden oder Sensordaten welche künstlich erzeugt wurden, so dass sie Sensordaten einer Fahrt eines Fahrzeuges nachbilden, sind, und der Encoder Eingangsdaten auf Prototypen-Merkmals-Vektoren eines Satzes von Prototypen-Merkmals-Vektoren abbildet, und das Verfahren folgenden Schritte umfasst:
a) Empfangen eines ersten Eingangsdatums aus dem ersten Satz von Trainingsdaten,
b) Propagieren des ersten Eingangsdatums durch den Encoder, wobei dem Eingangsdatum von dem Encoder ein oder mehr Merkmals-Vektoren zugewiesen werden, und in Abhängigkeit der zugewiesenen Merkmals-Vektoren eine bestimmte Menge von Prototypen-Merkmals-Vektoren ermittelt und dem ersten Eingangsdatum zugewiesen werden,
c) Erstellung eines aggregierten Vektors für das erste Eingangsdatum, wobei der aggregierte Vektor ein Histogramm-Vektor ist, welcher jedem Prototypen-Merkmals-Vektoren eine ganze Zahl zuordnet, welche die jeweils zugewiesene Anzahl des jeweiligen Prototypen-Merkmals-Vektoren repräsentiert,
d) Durchführung der Schritte a) bis c) mit einem zweiten Eingangsdatum aus dem ersten Satz von Trainingsdaten und Erstellung eines zweiten aggregierten Vektors für das zweite Eingangsdatum,
e) Vergleich zumindest des ersten und des zweiten aggregierten Vektors und Bestimmung eines Ähnlichkeitsmaßes der aggregierten Vektoren,
f) Entfernen des ersten Eingangsdatums aus dem ersten Satz von Trainingsdaten, wenn das bestimmte Ähnlichkeitsmaß einen Schwellwert überschreitet, wobei das Entfernen, zur Folge hat, dass das erste Eingangsdatum aus dem ersten Trainingsdatensatz nicht zu einem ersten Training verwendet wird.

2. Verfahren nach Anspruch 1 **gekennzeichnet dadurch, dass** das erste und das zweite Eingangsdatum des ersten Satzes von Trainingsdaten zeitlich aufeinander folgende Daten in der zeitlichen Sequenz der Trainingsdaten sind.

3. Verfahren nach Anspruch 1 **gekennzeichnet dadurch, dass** die Trainingsdaten des ersten Satzes von Trainingsdaten zum Trainieren eines Algorithmus für das hochautomatisierte oder autonome steuern von Fahrzeugen verwendet werden.

4. Verfahren nach Anspruch 1 **gekennzeichnet dadurch, dass** die Schritte a) bis f) direkt bei der Aufzeichnung oder Erzeugung der Trainingsdaten des ersten Satzes von Trainingsdaten durchgeführt werden und in Schritt f) das erste Eingangsdatum aus dem ersten Satzes von Trainingsdaten entfernt wird, wenn der Schwellwert des Ähnlichkeitsmaßes überschritten wird.

5. Verfahren nach Anspruch 1 **gekennzeichnet dadurch, dass** die Schritte a) bis f) vor dem Training oder einem Preeprocessing mit den Trainingsdaten des ersten Satzes von Trainingsdaten durchgeführt wird.

6. Verfahren nach Anspruch 1 **gekennzeichnet dadurch, dass** das Ähnlichkeitsmaß in Schritt e) mittels einer Kosinus-Ähnlichkeit bestimmt wird.

7. Verfahren nach Anspruch 1 **gekennzeichnet dadurch, dass** das Ähnlichkeitsmaß in Schritt e) den Vergleich des ersten, des zweiten und eines dritten aggregierten Vektors umfasst, wobei der dritte aggregierte Vektor mittels der Schritte a) bis c) mit einem dritten Eingangsdatum aus dem ersten Satz von Trainingsdaten erzeugt wurde.

8. Verfahren nach Anspruch 1 **gekennzeichnet dadurch, dass** der Encoder als Teil eines Autoencoders trainiert worden ist.

9. Verfahren nach Anspruch 8 **gekennzeichnet dadurch, dass** der Encoder einen ersten Satz von Prototypen-Merkmals-Vektoren umfasst, welche beim Trainieren des Autoencoders gelernt wurden.

10. Verfahren nach Anspruch 1 oder Anspruch 8 **gekennzeichnet dadurch, dass** der Encoder und/oder der Autoencoder mittels eines neuronalen Netzes, insbesondere eines Faltungsnetzwerks umgesetzt werden.

11. Computerprogramm-Produkt umfassend Programmcode, der bei Ausführung durch einen Computer diesen veranlässt, eines der Verfahren nach den Ansprüchen 1 bis 10 auszuführen.

12. Computersystem eingerichtet zur Ausführung eines der Verfahren nach den Ansprüchen 1 bis 10.

## Claims

1. A computer-implemented method for reducing training data by means of a system comprising an encoder, wherein
at least a part of the training data form a temporal sequence and are combined in a first set of training data, wherein the first set of training data comprises video frames, radar frames and/or lidar frames and the video frames, radar frames and/or lidar frames of the first set of training data are temporal sequences of sensor data recorded during a drive of a vehicle or sensor data artificially generated so as to emulate sensor data of a drive of a vehicle, and
the encoder maps input data to prototype feature vectors of a set of prototype feature vectors, and
the method comprises the steps of:
a) receiving a first input data from the first set of training data,
b) propagating the first input datum through the encoder, wherein one or more feature vectors are assigned to the input datum by the encoder, and determining a predetermined set of prototype feature vectors as a function of the assigned feature vectors and assigning them to the first input datum,
c) creating an aggregated vector for the first input date,
wherein the aggregated vector is a histogram vector which assigns an integer to each prototype feature vector,
which represents the respective assigned number of the respective prototype feature vectors,
d) performing steps a) to c) with a second input datum from the first set of training data and generating a second aggregated vector for the second input datum,
e) comparing at least the first and second aggregated vectors and determining a similarity measure of the aggregated vectors,
f) removing the first input datum from the first set of training data if the determined similarity measure exceeds a threshold, wherein
the removal results in the first input data from the first set of training data not being used for a first training.

2. Method according to claim 1 **characterized in that** the first and second input dates of the first set of training data are consecutive dates in the temporal sequence of the training data.

3. Method according to claim 1 **characterized in that** the training data of the first set of training data is used to train an algorithm for the highly automated or autonomous control of vehicles.

4. Method according to claim 1 **characterized in that** steps a) to f) are carried out directly during the recording or generation of the training data of the first set of training data and in step f) the first input data is removed from the first set of training data if the threshold value of the similarity measure is exceeded.

5. Method according to claim 1 **characterized in that** steps a) to f) are carried out before training or pre-processing with the training data of the first set of training data.

6. Method according to claim 1 **characterized in that** the similarity measure in step e) is determined by means of a cosine similarity.

7. Method according to claim 1 **characterized in that** the similarity measure in step e) comprises the comparison of the first, the second and a third aggregated vector, wherein the third aggregated vector was generated by means of steps a) to c) with a third input data from the first set of training data.

8. Method according to claim 1 **characterized in that** the encoder has been trained as part of an autoencoder.

9. Method according to claim 8, **characterized in that** the encoder comprises a first set of prototype feature vectors which have been learned during training of the autoencoder.

10. Method according to claim 1 or claim 8, **characterized in that** the encoder and/or the autoencoder are implemented by means of a neural network, in particular a convolutional neural network.

11. Computer program product comprising program code which, when executed by a computer, causes the computer to execute one of the methods according to claims 1 to 10.

12. Computer system arranged to execute one of the methods according to claims 1 to 10.

## Revendications

1. Procédé mis en oeuvre par ordinateur pour la réduction de données d'entraînement, au moyen d'un système comprenant un encodeur, dans lequel au moins une partie des données d'apprentissage forment une séquence temporelle et sont regroupées dans un premier ensemble de données d'apprentissage, le premier ensemble de données d'apprentissage comprenant des frames vidéo, radar et/ou lidar et les frames vidéo, radar et/ou lidar du premier ensemble de données d'apprentissage étant des séquences temporelles de données de capteur qui ont été enregistrées lors d'un déplacement d'un véhicule ou des données de capteur qui ont été générées artificiellement de manière à reproduire des données de capteur d'un déplacement d'un véhicule, et
le codeur mappe les données d'entrée sur des vecteurs de caractéristiques prototypes d'un ensemble de vecteurs de caractéristiques prototypes, et
le procédé comprend les étapes suivantes:
a) recevoir une première donnée d'entrée provenant du premier ensemble de données d'apprentissage,
b) la propagation des premières données d'entrée par le codeur, les données d'entrée étant affectées par le codeur à un ou plusieurs vecteurs de caractéristiques, et
en fonction des vecteurs de caractéristiques attribués, une certaine quantité de vecteurs de caractéristiques prototypes est déterminée et attribuée à la première donnée d'entrée,
c) création d'un vecteur agrégé pour la première date d'entrée,
où le vecteur agrégé est un vecteur d'histogramme qui associe un nombre entier à chaque vecteur de caractéristiques de prototype,
qui représente le nombre attribué à chaque vecteur de caractéristiques prototypes,
d) exécuter les étapes a) à c) avec une deuxième donnée d'entrée provenant du premier ensemble de données d'apprentissage et créer un deuxième vecteur agrégé pour la deuxième donnée d'entrée,
e) comparer au moins le premier et le deuxième vecteur agrégé et déterminer une mesure de similitude des vecteurs agrégés,
f) supprimer la première donnée d'entrée du premier ensemble de données d'apprentissage si la mesure de similitude déterminée dépasse une valeur seuil,
dans lequel
la suppression a pour effet que la première donnée d'entrée du premier ensemble de données d'apprentissage n'est pas utilisée pour un premier apprentissage.

2. Procédé selon la revendication 1, **caractérisé en ce que** la première et la deuxième date d'entrée du premier ensemble de données d'apprentissage sont des dates successives dans le temps dans la séquence temporelle des données d'apprentissage.

3. Procédé selon la revendication 1, **caractérisé en ce que** les données d'apprentissage du premier ensemble de données d'apprentissage sont utilisées pour l'apprentissage d'un algorithme pour la commande hautement automatisée ou autonome de véhicules.

4. Procédé selon la revendication 1, **caractérisé en ce que** les étapes a) à f) sont effectuées directement lors de l'enregistrement ou de la génération des données d'apprentissage du premier ensemble de données d'apprentissage et, à l'étape f), la première donnée d'entrée est supprimée du premier ensemble de données d'apprentissage lorsque la valeur seuil de la mesure de similitude est dépassée.

5. Procédé selon la revendication 1, **caractérisé en ce que** les étapes a) à f) sont effectuées avant l'apprentissage ou un prétraitement avec les données d'apprentissage du premier ensemble de données d'apprentissage.

6. Procédé selon la revendication 1, **caractérisé en ce que** la mesure de similarité dans les étapes) est déterminée au moyen d'une similarité en cosinus.

7. Procédé selon la revendication 1, **caractérisé en ce que** la mesure de similarité dans les étapes) comprend la comparaison du premier, du deuxième et d'un troisième vecteur agrégé, le troisième vecteur agrégé ayant été généré au moyen des étapes a) à c) avec une troisième donnée d'entrée provenant du premier ensemble de données d'apprentissage.

8. Procédé selon la revendication 1, **caractérisé en ce que** le codeur a été entraîné en tant que partie d'un auto-encodeur.

9. Procédé selon la revendication 8, **caractérisé en ce que** le codeur comprend un premier ensemble de vecteurs de caractéristiques prototypes qui ont été appris lors de l'apprentissage du codeur automatique.

10. Procédé selon la revendication 1 ou la revendication 8, **caractérisé en ce que** le codeur et/ou l'auto-encodeur sont mis en œuvre au moyen d'un réseau neuronal, en particulier un réseau convolutif.

11. Produit de programme d'ordinateur comprenant un code de programme qui, lorsqu'il est exécuté par un ordinateur, amène ce dernier à exécuter l'un des procédés selon les revendications 1 à 10.

12. Système informatique conçu pour exécuter l'un des procédés selon les revendications 1 à 10.
